# EUROPEAN PATENT APPLICATION

(11) **EP 1 170 889 A2**
(43) Date of publication of application: **09.01.2002**
(21) Application number: 01114169.4
(22) Date of filing: 11.06.2001
(51) Int. Cl.: H04B 10/17

(54) **Optical gain equalizer**

(30) Priority: 06.07.2000 JP 2000204527
(71) Applicant: KDD Submarine Cable Systems Inc., Tokyo (JP)
(72) Inventor: Kawazawa,Toshio.c/o KDD Submarine Cable System INC, Tokyo (JP)
(74) Representative: Schaumburg, Thoenes & Thurn

(57) **Abstract**

A gain equalizer comprising an optical element having first and second input ports and an output port wherein the first transmission wavelength characteristics between the first input port and the output port and the second transmission wavelength characteristics between the second input port and the output port vary inversely each other relative to wavelengths, first and second input optical fibers to connect to the first and second input ports respectively, an output optical fiber to connect to the output port, and a housing to store the optical element.

## Description

### FIELD OF THE INVENTION

This invention relates to a gain equalizer, and more specifically relates to a gain equalizer for equalizing gain of the optical signal propagating on an optical fiber.

### BACKGROUND OF THE INVENTION

In long haul optical fiber transmission systems, especially in optical submarine cable systems, although a variety of optical apparatuses (such as optical amplifiers, gain equalizers and optical filters) are disposed in the middle, the one with the most suitable input/output characteristics for the condition has to be selected when it comes to a connection with an optical fiber cable. Therefore, when it is unable to determine the necessary input/output characteristics in advance, a plurality of optical apparatuses having the estimated input/output characteristics should be prepared, and the appropriate one to connect with the optical fiber cable system is chosen from them at the field.

Especially, in submarine cable systems, it is necessary to store the optical apparatuses in a pressure-resistant housing which is resistant to the submarine hydraulic pressure. Since it takes a long term to produce and to inspect a pressure-resistant housing, it is preferable that a plurality of optical apparatuses are stored in a single housing and appropriate one is selectable as the need arises. As such gain equalizers to allow a choice of a plurality of input/output characteristics, the gain equalizers with the following two types of configurations are well known. One has a configuration simply to keep a plurality of gain equalizing filters, each being connected to optical input and output fibers which all lead to the outside, and the other one has a configuration in which only one input fiber and one output fiber are disposed, an optical switch is arranged on both input and output sides of a plurality of gain equalizing filters, each having input/output characteristics different from the others, and a controller which is capable of changing the optical switches through a controller which is capable of changing the optical switches through a control light (or mechanical operation) from the outside is installed to choose one of the plurality of the gain equalizing filters. In optical fiber communications, generally two optical fiber lines are used separately for the up and down streams, and thus a plurality of up stream gain equalizing filters and a plurality of down stream equalizing filters are generally kept in a single pressure-resistant housing.

In the former configuration, the input and output fibers connected with the desired optical apparatus are connected to optical fibers, and the rest of the input and output fibers connected to the unused optical apparatuses are ignored. In this case, it is necessary to prepare in advance a sufficient number of feed-throughs for the optical fibers in the pressure-resistant housing. The number of the feed-throughs is limited because of the size limitation of the feed-through in terms of the size of the pressure-resistant housing and the need for the sufficient quality control. Accordingly, it is impossible to dispose the gain equalizers exceeding the number of the prepared feed-throughs in the single pressure-resistant housing.

In the latter configuration, because the optical switch is controlled by a control signal such as an optical signal or an electric signal from the outside, it is necessary to have a circuit to detect the control signal, a control circuit to change the optical switch according to the control signal, and also a power feeding system to feed electric power to those circuits.

### SUMMARY OF THE INVENTION

It is therefore an object of the present invention to provide a gain equalizer capable of selecting desirable gain (loss) equalizing characteristics using a fewer number of elements.

Another object of the present invention is to provide a gain equalizer capable of selecting desirable gain (loss) equalizing characteristics using the minimum number of feed-throughs.

A gain equalizer according to this invention consists of an optical element having first and second input ports and an output port wherein the first transmission wavelength characteristics between the first input port and the output port and the second transmission wavelength characteristics between the second input port and the output port vary inversely each other relative to wavelengths, first and second input optical fibers connecting to the first and second input ports respectively, an output optical fiber connecting to the output port, and a housing to store the optical element.

With the above configuration, it is possible to select either the first or the second transmission wavelength characteristics (gain wavelength dependency characteristics or loss wavelength dependency characteristics) by inputting an optical signal into the first input optical fiber or the second input optical fiber. Accordingly, it is possible to select one from the two kinds of the gain (loss) wavelength characteristics using a fewer ports. In addition, since it has no electric circuit and optical circuit for switching, a switching control signal and a power feeding system are naturally unnecessary. For example, the transmission wavelength characteristics mean so called gain profile or loss profile.

The gain equalizer according to the invention further consists of an optical element having an input port and first and second output ports wherein the first transmission wavelength characteristics between the input port and the first output port and the second transmission wavelength characteristics between the input port and the second output port vary inversely each other relative to wavelengths, an input optical fiber to connect to the input port, first and second output optical fibers connect to the first and second output ports respectively, and a housing to store the optical element.

With the above configuration, it is possible to select either the first or second transmission wavelength characteristics (gain wavelength characteristics or loss wavelength characteristics) depending on from which one of the first and second output optical fibers an optical signal is output. Accordingly, it is possible to select one from the two kinds of the gain (loss) wavelength characteristics using a fewer ports. In addition, since it has no electric circuit and optical circuit for switching, a switching control signal and a power feeding system are naturally unnecessary.

When the housing is made to be pressure-resistant, this invention is applicable to submarine cable systems.

For example, the optical element consists of a WDM optical coupler or a dielectric multilayer optical coupler. This makes it easier to obtain desirable gain (loss) characteristics.

The gain equalizer according to the invention consists of first and second optical elements, each element having first and second input ports and an output port wherein the first transmission wavelength characteristics between the first input port and the output port and the second transmission wavelength characteristics between the second input port and the output port vary inversely each other relative to wavelengths, first and second input optical fibers to connect to the first and second input ports of the first optical element respectively, a first output optical fiber to connect to the output port of the first optical element, third and fourth input optical fibers to connect to the first and second input ports of the second optical element respectively, a second output optical fiber to connect to the output port of the second optical element, and a housing to store the first and second optical elements.

The gain equalizer according to the invention consists of first and second optical elements, each element having an input port and first and second output ports wherein the first transmission wavelength characteristics between the input port and the first output port and the second transmission wavelength characteristics between the input port and the second output port vary inversely each other relative to wavelengths, a first input optical fiber to connect to the input port of the first optical element, first and second output optical fibers to connect to the first and second output ports of the first optical element respectively, a second input optical fiber to connect to the input port of the second optical element, third and forth output optical fiber to connect to the first and second output port of the second optical element respectively, and a housing to store the first and second optical elements.

In those configurations, besides the above-described operation effects, when separate optical fiber systems of up and down streams are used it is possible to select the input/output characteristics of each system separately.

A gain equalizer according to the invention consists of a first optical element having first and second input ports and a first output port wherein the first transmission wavelength characteristics between the first input port and the first output port and the second transmission wavelength characteristics between the second input port and the first output port vary inversely each other relative to wavelengths, a second optical element having a third input port and second and third output ports wherein the third transmission wavelength characteristics between the third input port and the second output port and the fourth transmission wavelength characteristics between the third input port and the third output port vary each other relative to wavelengths, first and second input light transmitting mediums to connect to the first and second input ports respectively, first and second output light transmitting mediums to connect to the second and third output ports respectively, and an optical connector to connect the first output port with the third input port.

The gain equalizer according to the invention consists of a first optical element having a pair of first and second ports and a pair of third and forth ports wherein the first transmission wavelength characteristics between the through-ports and the second transmission wavelength characteristics between the split-ports vary inversely each other relative to wavelengths, a second optical element having two ports, one of the ports being connected to the fourth port of the first optical element, wherein the transmission wavelength characteristics between the two ports are practically equal to either of the first and second transmission wavelength characteristics, first and second light transmitting mediums to connect to the first and second ports respectively, a third light transmitting medium to connect to the third port, and a fourth light transmitting medium to connect to the other port of the second optical element.

With the above configurations, it is possible to choose from even greater numbers of the input/output characteristics.

### BRIEF DESCRIPTION OF THE DRAWING

The above and other objects, features and advantages of the present invention will be apparent from the following detailed description of the preferred embodiments of the invention in conjunction with the accompanying drawings, in which:
FIG. 1 shows a schematic block diagram of a first embodiment according to the invention;
FIG. 2 shows an example of input/output characteristics of WDM optical couplers 12 and 14;
FIG. 3 shows a schematic block diagram of a second embodiment according to the invention;
FIG. 4 shows a first example of a configuration to connect two WDM optical couplers in serial;
FIG. 5 shows a second example of a configuration to connect two WDM optical couplers in serial;
FIG. 6 shows a third example of a configuration to connect two WDM optical couplers in serial; and
FIG. 7 shows a fourth example of a configuration to connect two WDM optical couplers in serial.

### DESCRIPTION OF THE PREFERRED EMBODIMENT

Embodiments of the invention are explained below in detail with reference to the drawings.

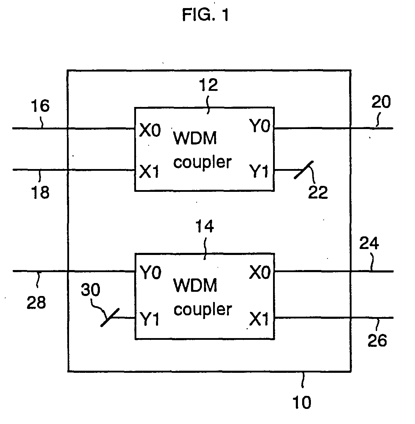

FIG. 1 shows a schematic block diagram of a first embodiment according to the invention. Two WDM optical couplers (e.g. WDM fiber couplers) 12, 14 having two terminal pairs are disposed in a pressure-resistant housing 10. Input optical fibers 16 and 18 which extend to the outside of the pressure-resistant housing 10 connect to input ports X0 and X1 of the WDM optical coupler 12 respectively. An output optical fiber 20 which extends to the outside of the pressure-resistant housing 10 connects to an output port Y0 of the WDM optical coupler 12, and an output port Y1 of the WDM optical coupler 12 is terminated by a nonreflecting element (or a absorbing element) 22. Similarly, input optical fibers 24, 26 which extend to the outside of the pressure-resistant housing 10 connect to input ports X0, X1 of the WDM optical coupler 14. An output optical fiber 28 which extends to the outside of the pressure-resistant housing 10 connects to an output port Y0 of the WDM optical coupler 14, and an output port Y1 of the WDM optical coupler 14 is terminated by a nonreflecting element (or an absorbing element) 30.

The nonreflecting elements 22, 30 are disposed to prevent unnecessary reflected light. If such reflected light does not exist, those nonreflecting elements 22, 30 can be omitted.

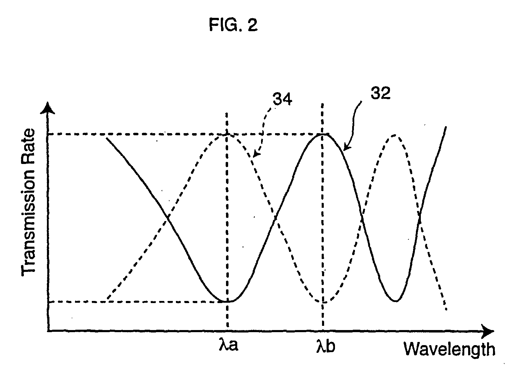

FIG. 2 shows the input/output characteristics, i.e. the through-port characteristics, between the port X0 and the port Y0 (and between the port X1 and the port Y1) of the WDM optical couplers 12, 14, and the input/output characteristics, i.e. the split-port characteristics between the port X0 and the port Y1 (and between the port X1 and the port Y0) of the WDM optical couplers 12, 14. The horizontal axis expresses wavelength, and the vertical axis expresses transmission factor, respectively. A characteristic curve 32 of a solid line shows through-port characteristics, a characteristic curve 34 of a broken line shows split-port characteristics. As understandable from the characteristic curves 32, 34, the split-port characteristics are reciprocals of the through-port characteristics. When the WDM optical couplers 12, 14 are used in their original use, they combine/split wavelengths λa and λb. Since a dielectric multilayer optical coupler also has the identical characteristics, it is possible to use the dielectric multilayer couplers instead of the WDM optical couplers 12, 14. For example, the wavelengths λa and λb are set so that the signal wavelength band can locate between the wavelengths λa and λb.

In the embodiment shown in FIG. 1, the wavelength-to-loss (gain) characteristics of the WDM optical coupler 12 are different according to which one of the input optical fibers 16 and 18 is selected. That is, when the input optical fiber 16 is selected, the input/output characteristics of the WDM optical coupler 12 indicate the through-port characteristics shown as the characteristic curve 32 in FIG. 2. On the other hand, when the input optical fiber 18 is selected, the input/output characteristics of the WDM optical coupler 12 indicate the split-port characteristics shown as the characteristic curve 34 in FIG. 2. The relations between the input optical fibers 24, 26 and the WDM optical coupler 14 are also identical.

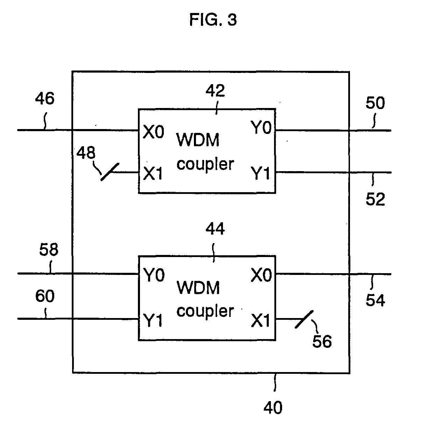

In the embodiment shown in FIG. 1, although two input optical fibers 16, 18 (24, 26) and one output optical fiber 20 (28) per one line are extended to the outside of the pressure-resistant housing 10, it is also applicable to reverse the number. FIG. 3 shows a schematic block diagram of such a modified embodiment.

In the modified embodiment shown in FIG.3, two WDM optical couplers 42, 44 having two terminal pairs are disposed in a pressure-resistant housing 40. An input optical fiber 46 which extends to the outside of the pressure-resistant housing 40 connects to an input port X0 of the WDM optical coupler 42. The other input port X1 of the WDM optical coupler 42 is terminated by a nonreflecting element (or an absorbing element) 48. Output optical fibers 50, 52 which extend to the outside of the pressure-resistant housing 40 connect to output ports Y0, Y1 of the WDM optical coupler 42. Similarly, An input optical fiber 54 which extends to the outside of the pressure-resistant housing 40 connects to the input port X0 of the WDM optical coupler 54. The input port X1 of the WDM optical coupler 44 is terminated by a nonreflecting element (or an absorbing element) 56. Output optical fibers 58, 60 which extend to the outside of the pressure-resistant housing 40 connect the output ports Y0, Y1 of the WDM optical coupler 44.

In the embodiment shown in FIG. 3, the wavelength-to-loss (gain) characteristics of the WDM optical coupler 42 are different according to which one of the output optical fibers 50, 52 is selected. That is, when the output optical fiber 50 is selected, the input/output characteristics of the WDM optical coupler 42 indicate the through-port characteristics shown as the characteristic curve 32 in FIG. 2, and when the output optical fiber 52 is selected, the input/output characteristics of the WDM optical coupler 42 indicate the split-port characteristics shown as the characteristic curve 34 in FIG. 2. The relations between the WDM optical coupler 44 and the output optical fibers 58, 60 are practically identical.

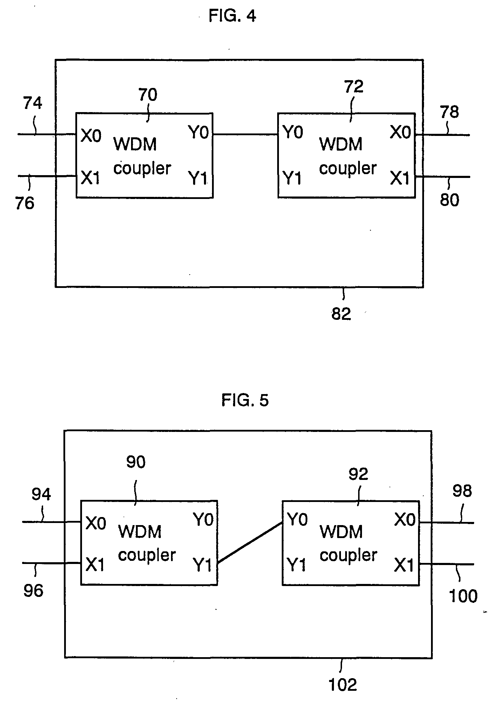

When two WDM optical couplers or dielectric multilayer optical couplers having the characteristics shown in FIG. 2 are connected in serial, it is possible to select one from more than two wavelength-to-gain (loss) characteristics. FIGS. 4 through 7 show connection examples of the above connecting configuration. In the below, the through-port characteristics are evaluated as +1, the split-port characteristics are evaluated as -1, and the practically flat characteristics relative to the wavelength are evaluated as 0. The connection examples shown in FIGS. 4 through 7 are prepared for every line and inserted into a pressure-resistant housing.

In the connection example shown in FIG. 4, an input port X0 of a WDM optical coupler 72 connects to an output port Y0 of a WDM optical coupler 70. The WDM optical couplers 70 and 72 both have the input/output characteristics shown in FIG. 2. Input optical fibers 74, 76 connect to the input ports X0, X1 of the WDM optical coupler 70 respectively, and output optical fibers 78, 80 connect to the output ports Y0, Y1 of the WDM optical coupler 72 respectively.

The WDM optical couplers 70, 72 are stored in a pressure-resistant housing 82, and the input optical fibers 74, 76 and the output optical fibers 78, 80 are extended to the outside of the pressure-resistant housing 82. When a plurality of lines are contained in a single cable, gain equalizers with the similar configuration are disposed in the housing 82 for the remaining one or more lines.

When an optical signal inputs to the input optical fiber 74 and outputs from the output optical fiber 78, the wavelength-to-gain (loss) characteristics are evaluated as +2 since they are obtained through multiplying the through-port characteristics of the WDM optical coupler 70 by the through-port characteristics of the WDM optical coupler 72. When the optical signal inputs to the input optical fiber 74 and outputs from the output optical fiber 80, the wavelength-to-gain (loss) characteristics are evaluated as 0 since they are obtained through multiplying the through-port characteristics of the WDM optical coupler 70 by the sprit-port characteristics of the WDM optical coupler 72 and indicate practically flat characteristics relative to wavelengths.

When the optical signal inputs to the input optical fiber 76 and outputs from the output optical fiber 78, the wavelength-to-gain (loss) characteristics are evaluated as 0 since they are obtained through multiplying the split-port characteristics of the WDM optical coupler 70 by the through-port characteristics of the WDM optical coupler 72 and indicate practically flat characteristics relative to wavelengths. When the optical signal inputs to the input optical fiber 76 and outputs from the output optical fiber 80, the wavelength-to-gain (loss) characteristics are evaluated as -2, since they can be obtained through multiplying the split-port characteristics of the WDM optical coupler 70 by the split-port characteristics of the WDM optical coupler 72.

The through-port characteristics and split-port characteristics are inclined in the opposite direction with the wavelengths, and thus in the connection example shown in FIG. 4, it is possible to select one from the three characteristics of +2 (the doubly intensified through-port characteristics), -2 (the doubly intensified split-port characteristics), and 0 (the practically flat characteristics relative to the wavelengths). When there is a significant difference between the characteristics of the WDM optical couplers 70 and 72, the final inclination of the input/output characteristics relative to the wavelengths differs depending on whether the optical signal receives the through-port characteristics at the WDM optical coupler 70 while it receives the split-port characteristics at the WDM optical coupler 72 or it is the other way around. That is, 0 can be substantially distinguished as -0 and +0. In this case, it is possible to select one from four input/output characteristics.

In the connection example shown in FIG. 5, an input port X0 of a WDM optical coupler 92 connects to an output port Y1 of a WDM optical coupler 90. The WDM optical couplers 90, 92 both have the input/output characteristics shown in FIG. 2. Input optical fibers 94, 96 connect to the input ports X0, X1 of the WDM optical coupler 90 respectively, and output optical fibers 98, 100 connect to the output ports Y0, Y1 of the WDM optical coupler 92 respectively.

The WDM optical couplers 90, 92 are disposed in a pressure-resistant housing 102, and the input optical fibers 94, 96 and the output optical fibers 98, 100 are extended to the outside of the pressure-resistant housing 102. If a plurality of lines are contained in a single cable, gain equalizers with the similar configuration should be disposed in the housing 102 for the remaining one or more lines.

When the optical signal inputs to the input optical fiber 94 and outputs from the output optical fiber 98, the wavelength-to-gain (loss) characteristics are evaluated as 0 since they are obtained through multiplying the split-port characteristics of the WDM optical coupler 90 by the through-port characteristics of the WDM optical coupler 92. When the optical light inputs to the input optical fiber 94 and outputs from the output optical fiber 100, the wavelength-to-gain (loss) characteristics are evaluated as -2 since they are obtained through multiplying the split-port characteristics of the WDM optical coupler 90 by the split-port characteristics of the WDM optical coupler 92.

When the optical signal inputs to the input optical fiber 96 and outputs from the output optical fiber 98, the wavelength-to-gain (loss) characteristics are evaluated as +2 since they are obtained through multiplying the through-port characteristics of the WDM optical coupler 90 by the through-port characteristics of the WDM optical coupler 92. When the optical signal inputs to the input optical fiber 96 and outputs from the output optical fiber 100, the wavelength-to-gain (loss) characteristics are evaluated as 0 since they are obtained through multiplying the through-port characteristics of the WDM optical coupler 90 by the split-port characteristics of the WDM optical coupler 92.

As described above, in the connection example shown in FIG. 5, it is also possible to select one from the three characteristics of +2 (the doubly intensified through-port characteristics), -2 (the doubly intensified split-port characteristics), and 0 (the practically flat characteristics relative to the wavelength). Similarly to the configuration shown in FIG. 4, when there is a significant difference between the characteristics of the WDM optical couplers 90 and 92, it is possible to distinguish the 0 as -0 and +0. Accordingly, in such a case, it is possible to select one from four input/output characteristics.

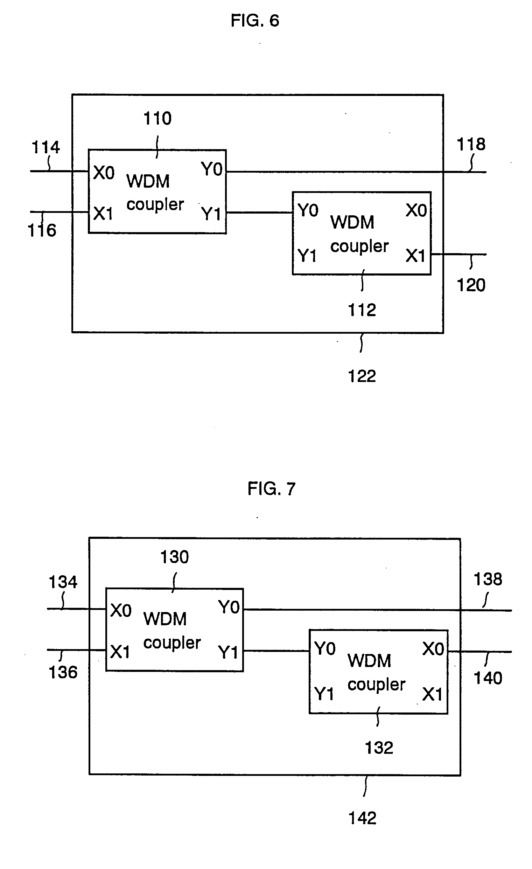

In the connection example shown in FIG. 6, an input port X0 of a WDM optical coupler 112 connects to an output port Y1 of a WDM optical coupler 110. The WDM optical couplers 110 and 112 both have the input/output characteristics shown in FIG. 2. Input optical fibers 114, 116 connect to input ports X0, X1 of the WDM optical coupler 110 respectively, and an output optical fiber 118 connects to an output port Y0 of the WDM optical coupler 110. An output optical fiber 120 connects to an output port Y1 of the WDM optical coupler 112.

The WDM optical couplers 110 and 112 are disposed in a pressure-resistant housing 122, and the input optical fibers 114, 116 and the output optical fibers 118, 120 are extended to the outside of the pressure-resistant housing 122. When a plurality of lines are contained in a single cable, gain equalizers with the same configuration are inserted in the housing 122 for the remaining one or more lines.

When an optical signal inputs to the input optical fiber 114 and outputs from the output optical fiber 118, the wavelength-to-gain (loss) characteristics are evaluated +1 since they become the through-port characteristics of the WDM optical coupler 110. When the optical signal inputs the input optical fiber 114 and outputs from the output optical fiber 120, the wavelength-to-gain (loss) characteristics is evaluated as -2 since they are obtained through multiplying the split-port characteristics of the WDM optical coupler 110 by the split-port characteristics of the WDM optical coupler 118.

When the optical signal inputs to the input optical fiber 116 and outputs from the output optical fiber 118, the wavelength-to-gain (loss) characteristics is evaluated as -1 since they become the split-port characteristics of the WDM optical coupler 110. When the optical signal inputs to the input optical fiber 116 and outputs from the output optical fiber 120, the wavelength-to-gain (loss) characteristics are evaluated as 0 since they are obtained through multiplying the through-port characteristics of the WDM optical coupler 110 by the split-port characteristics of the WDM optical coupler 112.

In the connection example shown in FIG. 6, it is possible to select one from four characteristics of +1 (the through-port characteristics at a time), -2 (the doubly intensified split-port characteristics), -1 (the split-port characteristics at a time), and 0 (the practically flat characteristics relative to the wavelength).

In the connection example shown in FIG. 7, an input port X0 of a WDM optical coupler 132 connects to an output port Y1 of a WDM optical coupler 130. The WDM optical couplers 130 and 132 both have the input/output characteristics shown in FIG. 2. Input optical fibers 134, 136 connect to input ports X0, X1 of the WDM optical coupler 130 respectively, and an output optical fiber 138 connects to an output port Y0 of the WDM optical coupler 130. An output optical fiber 140 connects to an output port Y0 of the WDM optical coupler 132.

The WDM optical couplers 130 and 132 are disposed in a pressure-resistant housing 142, and the input optical fibers 134, 136 and the output optical fibers 138, 140 are extended to the outside of the pressure-resistant housing 142. When a plurality of lines are contained in a single cable, gain equalizers with the same configuration are inserted in the housing 142 for the remaining one or more lines.

When an optical signal inputs to the input optical fiber 134 and outputs form the output optical fiber 138, the wavelength-to-gain (loss) characteristics are evaluated as +1 since they become the through-port of the WDM optical coupler 130. When the optical signal inputs to the input optical fiber 134 and outputs from the output optical fiber 140, the wavelength-to-gain (loss) characteristics are evaluated as 0 since they are obtained through multiplying the split-port characteristics of the WDM optical coupler 130 by the through-port characteristics of the WDM optical coupler 118 and become practically flat relative to the wavelengths.

When the optical signal inputs to the input optical fiber 136 and outputs from the output optical fiber 138, the wavelength-to-gain (loss) characteristics are evaluated as -1 since they become the split-port characteristics of the WDM optical coupler 130. When the optical signal inputs to the input optical fiber 136 and outputs from the output optical fiber 140, the wavelength-to-gain (loss) characteristics are evaluated as +2 since they are obtained through multiplying the through-port characteristics of the WDM optical coupler 130 by the through-port characteristics of the WDM optical coupler 132.

In the connection example shown in FIG. 7, it is possible to select one from four characteristics of +1 (the through-port characteristics at a time), 0 (the practically flat characteristics relative to the wavelength), -1 (the split-port characteristics at a time), and +2 (the doubly intensified through-port characteristics).

In the connection examples shown in FIGS. 4 through 7, it is possible to replace the input and the output since the reciprocity theorem is formed.

As readily understandable from the aforementioned explanation, according to the invention, it is possible to select one from a plurality of gain equalizing characteristics with a fewer elements. In addition, since it is possible to have many options compared to the small number of input ports and output ports, the number of signal ports to be prepared at the outside can be relatively reduced. A control circuit for switching optical function becomes unnecessary, and therefore the configuration can be simplified and a power feeding system is also unnecessary.

While the invention has been described with reference to the specific embodiment, it will be apparent to those skilled in the art that various changes and modifications can be made to the specific embodiment without departing from the spirit and scope of the invention as defined in the claims.

## Claims

1. A gain equalizer comprising:
an optical element having first and second input ports and an output port wherein the first transmission wavelength characteristics between the first input port and the output port and the second transmission wavelength characteristics between the second input port and the output port vary inversely each other relative to wavelengths;
first and second input optical fibers to connect to the first and second input ports respectively;
an output optical fiber to connect to the output port; and
a housing to store the optical element.

2. A gain equalizer comprising:
an optical element having an input port and first and second output ports wherein the first transmission wavelength characteristics between the input port and the first output port and the second transmission wavelength characteristics between the input port and the second output port vary inversely each other relative to wavelengths;
an input optical fiber to connect to the input port;
first and second output optical fiber to connect to the first and second output ports respectively; and
a housing to store the optical element.

3. The gain equalizer of claim 1 or 2 wherein the housing comprises a pressure-resistant housing.

4. The gain equalizer of claim 1 or 2 wherein the optical element comprises of a WDM optical coupler.

5. The gain equalizer of claim 1 or 2 wherein the optical element comprises a dielectric multilayer optical coupler.

6. A gain equalizer comprising:
first and second optical elements, each having first and second input ports and an output port wherein the first transmission wavelength characteristics between the first input port and the output port and the second transmission wavelength characteristics between the second input port and the output port vary inversely each other relative to wavelengths;
first and second input optical fibers to connect to the first and second input ports of the first optical element respectively;
a first output optical fiber to connect to the output port of the first optical element;
third and fourth input optical fibers to connect to the first and second input ports of the second optical element respectively;
a second output optical fiber to connect to the output port of the second optical element; and
a housing to store the first and second optical elements.

7. A gain equalizer comprising:
first and second optical elements, each having an input port and first and second output ports wherein the first transmission wavelength characteristics between the input port and the first output port and the second transmission wavelength characteristics between the input port and the second output port vary inversely each other relative to wavelengths;
a first input optical fiber to connect to the input port of the first optical element;
first and second output optical fibers to connect to the first and second output ports of the first optical element respectively;
a second input optical fiber to connect to the input port of the second optical element;
third and fourth output optical fibers to connect to the first and second output ports of the second optical element respectively; and
a housing to store the first and second optical elements.

8. The gain equalizer of claim 6 or 7 wherein the housing comprises a pressure-resistant housing.

9. The gain equalizer of claim 6 or 7 wherein the optical element comprises a WDM optical coupler.

10. The gain equalizer of claim 6 or 7 wherein the optical element comprises a dielectric multilayer optical coupler.

11. A gain equalizer comprising:
a first optical element having first and second input ports and a first output port wherein the first transmission wavelength characteristics between the first input port and the first output port and the second transmission wavelength characteristics between the second input port and the first output port vary inversely each other relative to wavelengths;
a second optical element having a third input port and second and third output ports wherein the third transmission wavelength characteristics between the third input port and the second output port and the fourth transmission wavelength characteristics between the third input port and the third output port vary inversely each other relative to wavelengths;
first and second input light transmitting mediums to connect to the first and second input ports respectively;
first and second output light transmitting mediums to connect to the second and third output ports respectively;
an optical connector to connect the first output port with the third input port.

12. The gain equalizer of claim 11 wherein the first transmission wavelength characteristics are practically equal to the third transmission wavelength characteristics and the second transmission wavelength characteristics are practically equal to the fourth transmission wavelength characteristics.

13. The gain equalizer of claim 11 wherein the first transmission wavelength characteristics are practically equal to the fourth transmission wavelength characteristics and the second transmission wavelength characteristics are practically equal to the third transmission wavelength characteristics.

14. The gain equalizer of claim 11 further comprising a pressure-resistant housing to store the first and second optical elements and the optical connector.

15. The gain equalizer of claim 11 wherein each of the first and second optical elements comprises a WDM optical coupler.

16. The gain equalizer of claim 11 wherein each of the first and second optical elements comprises a dielectric multilayer optical coupler.

17. A gain equalizer comprising:
a first optical element having a pair of first and second ports and a pair of third and fourth ports wherein the first transmission wavelength characteristics between the through-ports and the second transmission wavelength characteristics between the split-ports vary inversely each other relative to wavelengths;
a second optical element having two ports, one of the ports being connected to the fourth port of the first optical element, wherein the transmission wavelength characteristics between the two ports are practically equal to either of the first and second transmission wavelength characteristics;
first and second light transmitting mediums to connect to the first and second ports respectively;
a third light transmitting medium to connect to the third port; and
a fourth light transmitting medium to connect to the other port of the second optical element.

18. The gain equalizer of claim 17 further comprising a pressure-resistant housing to store the first and second optical elements.

19. The gain equalizer of claim 17 wherein each of the first and second optical elements comprises a WDM optical coupler.

20. The gain equalizer of claim 17 wherein each of the first and second optical elements comprises a dielectric multilayer optical coupler.
